# EUROPEAN PATENT APPLICATION

(11) **EP 4 564 768 A1**
(43) Date of publication of application: **04.06.2025**
(21) Application number: 23213219.1
(22) Date of filing: 30.11.2023
(51) Int. Cl.: H04L 41/16

(54) **METHOD FOR PROVIDING A MACHINE LEARNING MODEL TO A MOBILE TERMINAL**

(71) Applicant: NTT DOCOMO, INC., Tokyo 100-6150 (JP)
(72) Inventor: BAKHSHI, Bahador, 80687 Munich (DE); SAMA, Malla Reddy, 80687 Munich (DE); TANAKA, Itsuma, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

A method for providing a machine learning model to a mobile terminal of a mobile communication system is described comprising determining, by a mobile radio communication network of the communication system, that a machine learning model should be delivered to a mobile terminal to be used by the mobile terminal for a machine learning task and providing the requested machine learning model to the mobile terminal via control plane communication.

## Description

The present disclosure relates to methods for providing a machine learning model to a mobile terminal.

In a communication system such as a 5G mobile communication system it is important to ensure that a certain service quality can be maintained. For this, various information like load, resource usage, available components, users mobility, state of components etc. may be monitored and may be taken into account when controlling the communication system, e.g. take measures when overload is imminent, to avoid a drop of service quality, etc. Gathering and/or evaluating this information can be done using machine learning models trained accordingly for corresponding prediction tasks. For example, using artificial intelligence (AI) and machine learning (ML) techniques is a promising approach to improve the performance of NG-RAN (next generation radio access network) air interface in some use cases such as Channel Status Information (CSI) feedback enhancement, beam management optimization and positioning accuracy enhancement. However, this requires, at least in some cases, that machine learning models are used on the terminal side but, due to the effort required for training, model training on the terminal side being challenging (because of constrained power and computational resources), model training should typically be offloaded to the network, i.e. models should be trained on the network side (e.g. a network function or application function) and provided to mobile terminals when they need it. Accordingly, efficient approaches for providing machine learning models to mobile terminals of mobile communication systems are desirable.

A method for providing a machine learning model to a mobile terminal of a mobile communication system is provided comprising determining, by a mobile radio communication network of the communication system, that a machine learning model should be delivered to a mobile terminal to be used by the mobile terminal for a machine learning task and providing the machine learning model to the mobile terminal via control plane communication.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a communication system according to an embodiment.
Figure 2 shows a flow diagram 200 illustrating an ML (machine learning) model retrieval procedure (on the network side).
Figure 3 shows a flow diagram 300 illustrating an embodiment where an AMF (Access and Mobility Management Function) is acting as model provider.
Figure 4 shows a flow diagram illustrating an embodiment where an SMF (Session Management Function) is acting as model provider.
Figure 5 shows a flow diagram illustrating an embodiment where the model is requested and provided via RRC (Radio Resource Control) signalling.
Figure 6 shows a flow diagram illustrating a method for providing a machine learning model to a mobile terminal of a mobile communication system according to an embodiment.
Figure 7 shows a flow diagram illustrating a method acquiring a machine learning model from a mobile communication system according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for providing a machine learning model to a mobile terminal of a mobile communication system, comprising determining, by a mobile radio communication network of the communication system, that a machine learning model should be delivered to a mobile terminal to be used by the mobile terminal for a machine learning task and providing the machine learning model to the mobile terminal via control plane communication.
Example 2 is the method of example 1, comprising determining that the machine learning model should be delivered to the mobile terminal based on one or more of temporal and/or spatial changes of operational conditions, machine learning model performance degradation, a configuration of the mobile terminal and an operator policy of the mobile communication network.
Example 3 is the method of example 1, comprising determining that the machine learning model should be delivered to the mobile terminal in reaction to receiving, by the mobile radio communication network, a request from the mobile terminal for the machine learning model and providing the machine learning model to the mobile terminal in response to the request.
Example 4 is the method of example 3, wherein the request includes an indication that the machine learning model is requested for a machine learning task in the mobile terminal. Example 5 is the method of example 3 or 4, comprising receiving the request in a core network of the communication network.
Example 6 is the method of example 3 or 4, comprising receiving the request in a radio access network of the communication network, generating a second request for the machine learning model in the radio access network, transmitting the second request to a core network of the communication network, providing the machine learning model from the core network to the radio access network and providing the machine learning model from the radio access network to the mobile terminal.
Example 7 is the method of example 6, comprising receiving the request and providing the machine learning model from the radio access network to the mobile terminal by Radio Resource Control messages.
Example 8 is the method of example 6 or 7, comprising transmitting the second request to the core network and providing the machine learning model from the core network to the radio access network via Next Generation Application Protocol messages.
Example 9 is the method of any one of examples 1 to 8, comprising a core network component discovering a storage location of the machine learning model, retrieving the machine learning model from the discovered storage location and providing the machine learning model to the mobile terminal.
Example 10 is the method of example 9, wherein the core network component is a an Access and Mobility Management Function or a Session Management Function.
Example 11 is the method of any one of examples 1 to 10, wherein the machine learning model is to be used by the mobile terminal for a prediction task and/or for a compression and/or encoding and decompression and/or decoding task.
Example 12 is a communication network configured to perform the method of any one of examples 1 to 11.
Example 13 is a method for acquiring a machine learning model from a mobile communication system, comprising transmitting a request from a mobile terminal to a mobile radio communication network of the communication system for a machine learning model to be used by the mobile terminal for a machine learning task and receiving the machine learning model in response to the request via control plane communication.
Example 14 is the method of example 13, comprising determining, by the mobile terminal, that it should request the machine learning model based on one or more of temporal and/or spatial changes of operational conditions, machine learning model performance degradation, a configuration of the mobile terminal and an operator policy of the mobile communication network.
Example 15 is a mobile terminal configured to perform the method of example 13 or 14.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

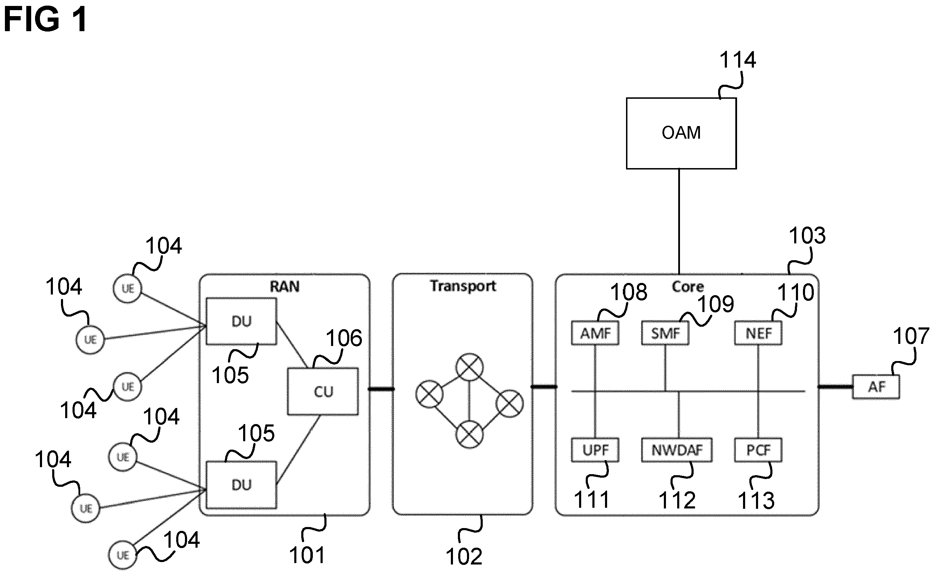

Figure 1 shows a communication system according to an embodiment.

The communication system comprises, in this example, a radio access network (RAN) 101, a core network 103 and a transport (communication) network 102 connecting the RAN 101 to the core network 103. Subscriber terminals (denoted as LTEs according to 3GPP) 104 are connected to distributed units 105 of the RAN 101 which are connected to a centralized unit 106 (to implement base stations of the RAN 101). An application function 107 is connected to the core network 103. The core network 103, e.g. a 5G core network (5GC) comprises various network functions (NFs) like an AMF (Access and Mobility Management Function) 108, an SMF (Session Management Function) 109, an NEF (Network Exposure Function) 110, a UPF (User Plane Function) 111, an NWDAF (Network Data Analytics Function) 112 and a PCF (Policy Control Function) 113.

The core network 103 is coupled to an OAM (Operation, Administration and Maintenance) system 114.

In a communication system like illustrated in figure 1, machine learning (ML) models may be used for carrying out prediction tasks for various purposes such as
- CSI (channel state information) feedback enhancement, e.g., overhead reduction, improved accuracy, prediction
   ∘ spatial-frequency domain CSI compression using two-sided AI model
   ∘ time domain CSI prediction using UE sided model
- Beam management, e.g., beam prediction in time, and/or spatial domain for overhead and latency reduction, beam selection accuracy improvement, for example
   ∘ spatial-domain downlink beam prediction for a first set A of beams based on measurement results of a second set of beams
   ∘ temporal downlink beam prediction for a first set of beams based on the historic measurement results of a second set of beams
- Positioning accuracy enhancements for different scenarios including, e.g., those with heavy NLOS (non-line of sight) conditions
   ∘ direct AI/ML positioning
   ∘ AI/ML-assisted positioning
to optimize the performance of radio link between the subscriber terminals 104 and RAN 101. Additionally, AI/ML techniques such as
- Network Energy Saving, e.g. an ML model is used with
   ∘ input: UE mobility/trajectory, Current Energy efficiency, UE measurement report, ...
   ∘ output: predicted energy efficiency, Handover strategy, ...
- Load Balancing, e.g. an ML model is used with
   ∘ input: UE trajectory, UE traffic, RAN resource status, ...
   ∘ output: predicted own resource status information, ...
- Mobility Optimization, e.g. an ML model is used with
   ∘ input: UE location information, Radio measurements, UE handovers, ...
   ∘ output: predicted handover, LTE traffic prediction, ...
can be used in particular for example for improving RAN performance.

For one of the above purposes, a corresponding ML model may be trained by an entity, e.g. RAN entity, in particular a base station (denoted as gNB in 5G), OAM 114, a component (e.g. network function) of the core network 103 or also a third party (e.g. corresponding to AF 107 or connected to the core network 103 via AF 107). This training entity is in the following referred to as Model Training NF (MTF). It is capable of training ML models using training data gathered from other NFs, UEs, OAM etc. The MTF can for example be the NWDAF 112 containing a MTLF (Model Training Logical Function) with the extensions of supporting training models for RAN use-cases (e.g., CSI prediction model) providing models to other NFs than AnLF (Analytical Logical Function) such as AMF, UPF, SMF. The model training entity or MTF gathers training data and trains the respective ML model. The trained model (i.e. a specification of the trained model, e.g. in terms of neural network weights) is then stored in a storage which is in the following referred to as Model Repository NF (MRF) capable of storing the trained models and providing the models to other components and entities (e.g. NFs). The MRF is for example an ADRF (Analytics Data Repository Function) with the capability to provide stored models to NFs other than AnLF such as AMF, UPF and SMF.

A trained model may then be used in multiple inference locations. This may in particular include one or more mobile terminals. Therefore, according to various embodiments, approaches for delivering ML models from the network side, e.g. RAN, 5GC, OAM, or a third party or AF to the UE (via RAN) are provided.

According to various embodiments, model delivery is enabled by extending interfaces in UE and 5GC NFs for model delivery in CP (control plane). It should be noted that training locations inside and outside of the core network 103 (e.g. 5GC) are supported. The ML model may in particular be a RAN model, i.e. a ML model trained for RAN tasks, i.e. for performing prediction related to RAN operation.

For the embodiments described in the following, it is assumed that there are registration and discovery procedures where an MTF registers the supported models in an NRF (network repository function) with associated ML Model Filter information and other NFs discover and select the MTF via inquiring NRF for the specific model and corresponding filters.

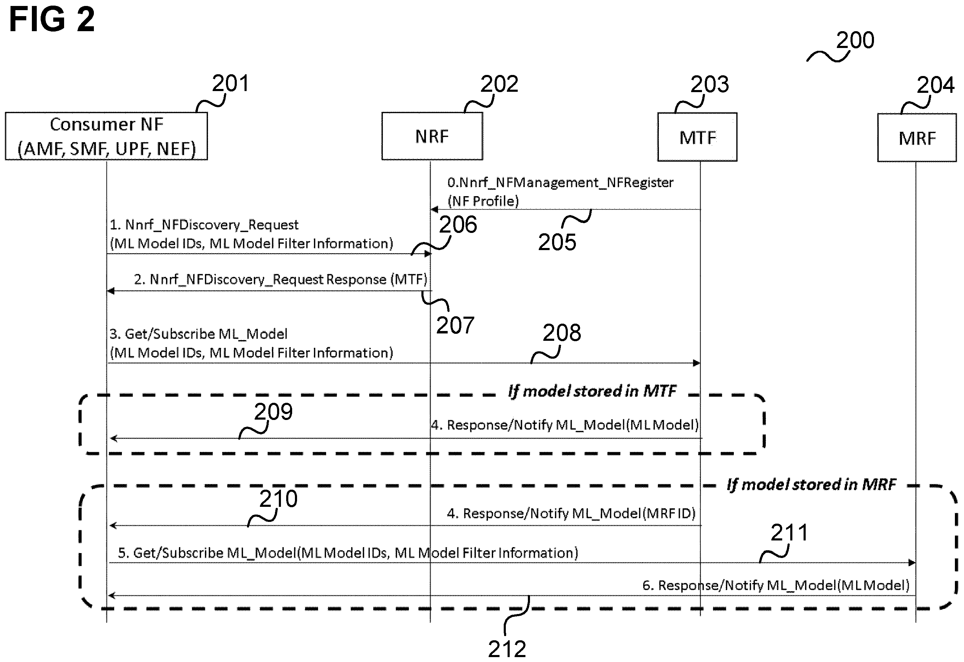

Figure 2 shows a flow diagram 200 illustrating an ML model retrieval procedure (on the network side).

A consumer NF 201 (i.e. a NF (network function) which acts as consumer, i.e. retrieves a trained ML model) such as an AMF, SMF, UPF or NEF, an NRF 202, an MTF 203 and an MRF 204 are involved in the flow.

In 205, the MTF 203 registers with the NRF 202 informing the NRF 202 in particular that the MTF 203 has ML model training and provisioning capability.

In 206, the consumer NF 201 sends a discovery request to the NRF 202 to which the NRF 202 responds in 207 with a discovery request response informing the consumer NF 201 about the MTF 203.

In 208, the consumer NF 201 requests an ML model from the MTF (by means of a get or a subscribe). The request may include various parameters regarding the requested model. In particular, in case the ML model is to be used on the terminal (UE) side, the request may include information about the LTE type, the UE vendor and the UE location.

If the requested ML model is stored in the MTF 203, the MTF 203 provides the requested model to the consumer NF 201 in 209.

If the requested ML model is not stored in the MTF 203 but in the MRF 204, the MTF 203 informs the consumer NF 201 about an identification of the MRF 204 in 210, the consumer NF 201 requests the ML model from the MRF in 211 and the MRF provides the requested ML model in 212.

Both the terminal and the network should be capable of ML model delivery from the network to the terminal; i.e., the terminal should be capable of requesting and accepting model from the network. The network should also be capable of training and delivery models to the terminal. A mobile terminal may inform the network about its capabilities and characteristics regarding ML models, e.g.
- UE Model Provisioning Capability (i.e., the UE has the capability to get AIML models from the network (e.g. 5G communication system (5GS))
- List of supported ML Models (e.g., ML model for CSI etc.)
- User device information (e.g., UE type, vendor, hardware, ...)

The mobile terminal may provide the information about its capabilities and characteristics for example as part of UE capability transfer (i.e. with a LTECapabilityInformation message to the network in response to a UECapabilityEnquiry message from the network) or in its registration request (that it sends to the RAN for registering in the network).

The network may perform Network ML Model Provisioning Capability Advertisement, i.e. inform UEs with its capabilities regarding ML model provisioning through system information, e.g. a SystemInformation message (e.g. in response to a SystemInformationRequest), for example in a system information block (SIB). The network may for example provide the following system information:
- Network Model Provisioning Capability (i.e., the network has the capability to provide ML models to the UE)
- List of supported ML Models (e.g., ML model for CSI)

In the following, embodiments where an ML model is provided from the network side to a mobile terminal via control plane communication.

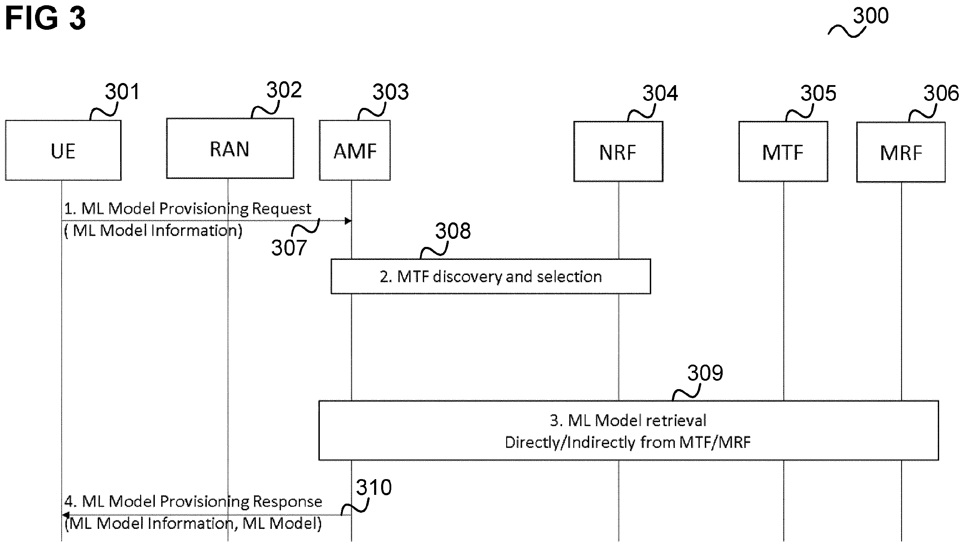

Figure 3 shows a flow diagram 300 illustrating an embodiment where an AMF is acting as model provider.

A mobile terminal 301, a RAN 302, an AMF 303, an NRF 304, an MTF 305 and an MRF 306 are involved in the flow.

In 307, the mobile terminal 301 requests an ML model from the AMF 303. The request includes ML model information, which may for example be ML model provisioning content according to 3GPP, e.g.
- a list of Analytics ID(s): identifies the analytics for which the ML model is used
- use case context: indicates the context of use of the analytics to select the most relevant ML model
- ML Model Interoperability Information
- ML Model Target Period
- Accuracy level(s) of Interest
- Time when model is needed

Further, according to various embodiments, the ML model information is extended with the indication that the request model should support that a UE is the ultimate model consumer (i.e. that the ML model may be used on the terminal side).

In 308, the AMF 303 performs MTF discovery and selection followed by ML model retrieval in 309 (e.g. as described with reference to figure 2).

In 310, the AMF 303 provides the requested ML model (i.e. a specification of the trained model, e.g. in terms of neural network weights) to the mobile terminal by means of a ML model provisioning response.

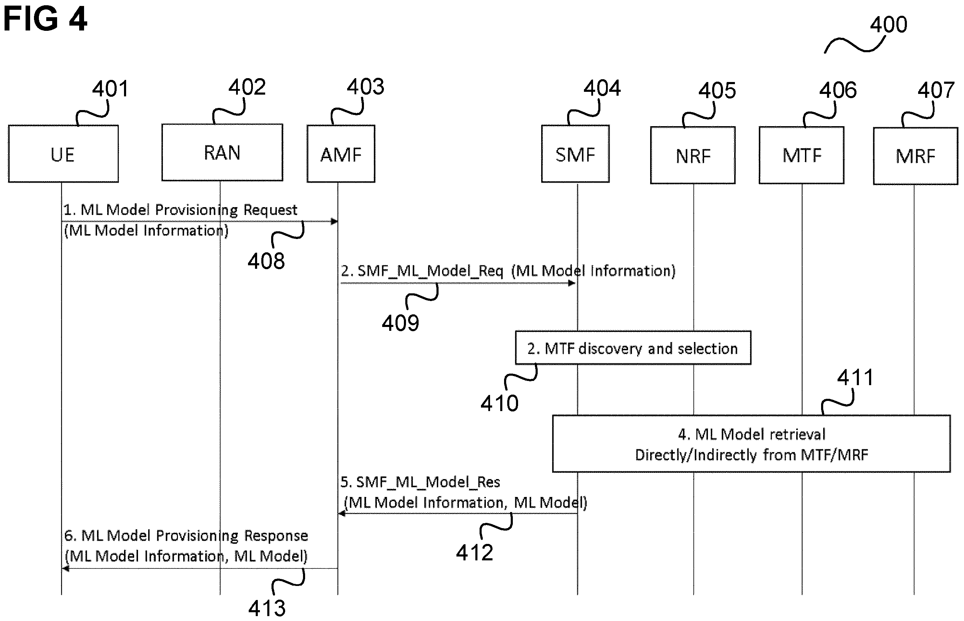

Figure 4 shows a flow diagram 400 illustrating an embodiment where an SMF is acting as model provider.

A mobile terminal 401, a RAN 402, an AMF 403, an SMF 404, an NRF 405, an MTF 406 and an MRF 407 are involved in the flow.

In 408, the mobile terminal 401 requests an ML model from the AMF 403. The request includes ML model information, which may for example be ML model provisioning content according to 3GPP (see description of figure 3) which, according to various embodiments, is extended with the indication that the request model should support that a UE is the ultimate model consumer (i.e. that the ML model may be used on the terminal side).

In 409, the AMF 403 sends a corresponding request for the ML model to the AMF 404.

In 410, the SMF 404 performs MTF discovery and selection followed by ML model retrieval (e.g. as described with reference to figure 2) in 411.

In 412, the SMF 404 provides the requested ML model (i.e. a specification of the trained model, e.g. in terms of neural network weights) to the AMF 403.

In 413, the AMF 403 provides the requested ML model (i.e. the specification of the trained model) to the mobile terminal by means of a ML model provisioning response.

For the communication between AMF 403 and SMF 404 in 409 and 412, SBA (Service-Based Architecture) services for ML model provisioning may for example be introduced.

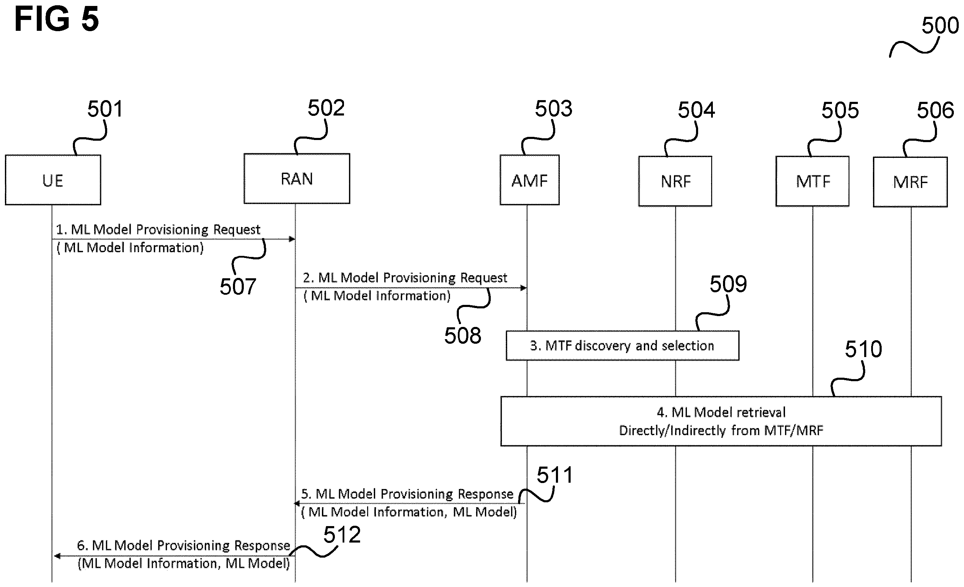

Figure 5 shows a flow diagram 500 illustrating an embodiment where the model is requested and provided via RRC (Radio Resource Control) signalling.

A mobile terminal 501, a RAN 502, an AMF 503, an NRF 504, an MTF 505 and an MRF 506 are involved in the flow.

In 507, the mobile terminal 501 requests an ML model from the RAN 502. The request includes ML model information, which may for example be ML model provisioning content according to 3GPP (see description of figure 3) which, according to various embodiments, is extended with the indication that the request model should support that a UE is the ultimate model consumer (i.e. that the ML model may be used on the terminal side).

In 508, the RAN 502 sends a corresponding request for the ML model to the AMF 503.

In 509, the AMF 503 performs MTF discovery and selection followed by ML model retrieval in 510 (e.g. as described with reference to figure 2).

In 511, the AMF 503 provides the requested ML model (i.e. a specification of the trained model, e.g. in terms of neural network weights) to the RAN 502 which forwards it to the mobile terminal 501 in 512.

For the communication between the mobile terminal 501 and the RAN 502 in 507 and 511 additional RRC (Radio Resource Control) messages for ML model request and delivery may be introduced. For the communication between RAN 502 and AMF 503 in 508 and 511 the NGAP (Next Generation Application Protocol) protocol may be extended by additional messages for ML model request and delivery.

It should be noted that all request messages (for requesting an ML model) and response messages (for providing the ML model) in the above examples can be implemented as subscribe and notify message pairs. This enables ML model delivery triggered by the network, where the mobile terminal subscribes for a specific model and then the network e.g. taking into account operator's policy, ML Model performance monitoring, mobile terminal mobility/handover etc. provides customized/updated versions of the model.

It should further be noted that the various approaches for ML model provisioning are not exclusive but multiple approaches can be implemented and used according to the operator's policy, mobile terminal configuration etc.

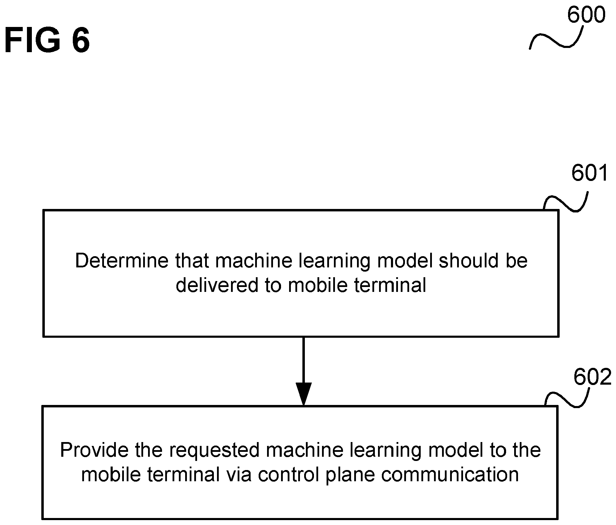

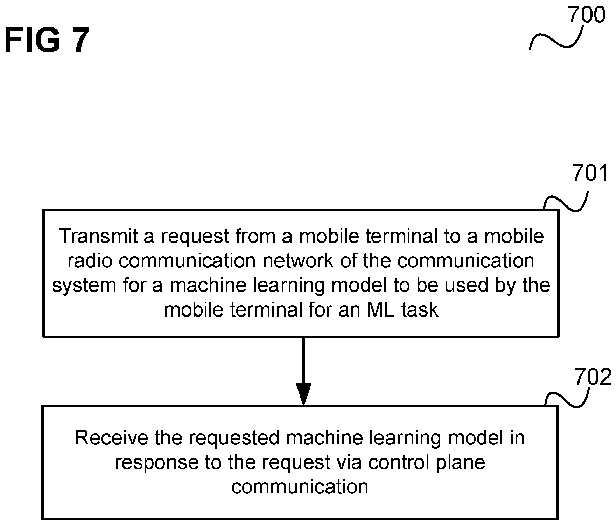

In summary, according to various embodiments, methods are provided as illustrated in figures 6 and 7.

Figure 6 shows a flow diagram 600 illustrating a method for providing a machine learning model to a mobile terminal of a mobile communication system according to an embodiment.

In 601, a mobile radio communication network of the communication system determines that a machine learning model should be delivered to a mobile terminal to be used by the mobile terminal for a machine learning task (e.g. inference, e.g. a prediction task, for example a prediction task for controlling radio access network operation or compression or encoding of data (e.g. as an autoencoder)). For example, this is determined in response of receiving a request from the mobile terminal for the machine learning model. The request may also be a subscription (i.e. a subscribe message) to a corresponding model provision service.

In 602, the mobile radio communication network provides the machine learning model to the mobile terminal via control plane communication (in reaction to the determination that the machine learning model should be delivered to the mobile terminal).

According to various embodiments, a communication network is provided configured to perform the method described with reference to figure 6.

The communication network for example corresponds to the RAN 101, the transport network 102 and/or the core network 103 of the communication system of figure 1.

Figure 7 shows a flow diagram 700 illustrating a method acquiring a machine learning model from a mobile communication system according to an embodiment.

In 701, a mobile terminal transmits a request to a mobile radio communication network of the communication system for a machine learning model to be used by the mobile terminal for an ML task.

In 702, the mobile terminal receives the requested machine learning model in response to the request via control plane communication.

According to various embodiments, a mobile terminal is provided configured to perform the method described with reference to figure 7.

The mobile terminal for example corresponds to one of the UEs 104 of the communication system of figure 1.

According to various embodiments, in other words, a ML model is provided to a mobile terminal via the control plane. This for example enables using ML models on the terminal side for communication optimization, e.g. the air interface.

As described above, various variants are possible which gives a flexible set approaches.

Providing the machine learning model via control plane communication may be understood as transmitting a specification of the machine learning models, i.e. the values of the trained parameters of the machine learning model (such as neural network weights in case that the machine learning model is a neural network) via control plane communication from the network side (i.e. the mobile radio communication network) to the mobile terminal (i.e. over the air interface), i.e. using a communication channel, interface and/or reference point belonging to control plane (of the mobile communication system).

The communication network and the mobile terminal comprise and/or are implemented by data processing components like one or more processors, memories, interfaces, receivers, transmitters, antennas etc. and may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for providing a machine learning model to a mobile terminal of a mobile communication system, comprising:
Determining, by a mobile radio communication network of the communication system, that a machine learning model should be delivered to a mobile terminal to be used by the mobile terminal for a machine learning task; and
Providing the machine learning model to the mobile terminal via control plane communication.

2. The method of claim 1, comprising determining that the machine learning model should be delivered to the mobile terminal based on one or more of temporal and/or spatial changes of operational conditions, machine learning model performance degradation, a configuration of the mobile terminal and an operator policy of the mobile communication network.

3. The method of claim 1, comprising determining that the machine learning model should be delivered to the mobile terminal in reaction to receiving, by the mobile radio communication network, a request from the mobile terminal for the machine learning model and providing the machine learning model to the mobile terminal in response to the request.

4. The method of claim 3, wherein the request includes an indication that the machine learning model is requested for a machine learning task in the mobile terminal.

5. The method of claim 3 or 4, comprising receiving the request in a core network of the communication network.

6. The method of claim 3 or 4, comprising receiving the request in a radio access network of the communication network, generating a second request for the machine learning model in the radio access network, transmitting the second request to a core network of the communication network, providing the machine learning model from the core network to the radio access network and providing the machine learning model from the radio access network to the mobile terminal.

7. The method of claim 6, comprising receiving the request and providing the machine learning model from the radio access network to the mobile terminal by Radio Resource Control messages.

8. The method of claim 6 or 7, comprising transmitting the second request to the core network and providing the machine learning model from the core network to the radio access network via Next Generation Application Protocol messages.

9. The method of any one of claims 1 to 8, comprising a core network component discovering a storage location of the machine learning model, retrieving the machine learning model from the discovered storage location and providing the machine learning model to the mobile terminal.

10. The method of claim 9, wherein the core network component is a an Access and Mobility Management Function or a Session Management Function.

11. The method of any one of claims 1 to 10, wherein the machine learning model is to be used by the mobile terminal for a prediction task and/or for a compression and/or encoding and decompression and/or decoding task.

12. A communication network configured to perform the method of any one of claims 1 to 11.

13. A method for acquiring a machine learning model from a mobile communication system, comprising:
transmitting a request from a mobile terminal to a mobile radio communication network of the communication system for a machine learning model to be used by the mobile terminal for a machine learning task; and
receiving the machine learning model in response to the request via control plane communication.

14. The method of claim 13, comprising determining, by the mobile terminal, that it should request the machine learning model based on one or more of temporal and/or spatial changes of operational conditions, machine learning model performance degradation, a configuration of the mobile terminal and an operator policy of the mobile communication network.

15. A mobile terminal configured to perform the method of claim 13 or 14.
